# EUROPÄISCHE PATENTANMELDUNG

(11) **EP 1 270 323 A1**
(43) Veröffentlichungstag der Anmeldung: **02.01.2003**
(21) Anmeldenummer: 01810601.3
(22) Anmeldetag: 19.06.2001
(51) Int. Cl.: B60Q 1/076

(54) **Stellvorrichtung zur Einstellung eines von einem Scheinwerfer ausgesendeten Lichtbündels**

(71) Anmelder: SAIA-Burgess Murten AG, 3280 Murten (CH)
(72) Erfinder: Die Erfindernennung liegt noch nicht vor
(74) Vertreter: Ventocilla, Abraham

(57) **Zusammenfassung**

Stellvorrichtung zur gesteuerten Einstellung der Richtung eines Lichtbündels, welches von einem Scheinwerfer eines Fahrzeuges ausgesendet wird, wobei der Scheinwerfer oder eine die Richtung des Lichtbündels beeinflussende Scheinwerferkomponente (11) des Scheinwerfers um mindestens zwei Schwenkachsen (13, 14) schwenkbar ist. Die Stellvorrichtung umfasst zwei Stellelemente (22, 23), die benachbart zueinander angeordnet sind, zwei mechanische Achsen (24, 25), die durch die Stellelemente (22, 23) bewegbar sind und die mit dem Scheinwerfer bzw. mit der Scheinwerferkomponente (11) an je einer Verbindungsstelle (41, 42) verbindbar sind, und eine Steuerschaltung (36), mit welcher Steuersignale erzeugbar sind, die eine Bewegung der beiden mechanischen Achsen (24, 25) bewirken.

## Beschreibung

Die Erfindung bezieht sich auf eine Stellvorrichtung gemäss Oberbegriff des Anspruchs 1.

Durch die Beladung eines Fahrzeuges oder durch Nickbewegungen des Fahrzeuges kann die Richtung des von einem Scheinwerfer ausgestrahlten Lichtbündels so verändert werden, dass z.B. entgegenkommende Fahrer geblendet werden. Um diese Gefahr der Blendung zu verringern, werden Stellvorrichtungen eingesetzt, die es erlauben, z.B. den Reflektor oder den Leuchtweitensteller, durch eine Steuerung entsprechend einzustellen. Zur Erhöhung der eigenen Fahrsicherheit werden auch Stellvorrichtungen entwickelt, die beim Fahren einer Kurve eine Schwenkung der Scheinwerfer bewirken.

Die bekannten Stellvorrichtungen haben den Nachteil, dass sie vergleichsweise gross sind und wegen den beschränkten Platzverhältnissen im Einbaubereich der Scheinwerfer den Einbau in ein Fahrzeug erschweren.

Eine Aufgabe der vorliegenden Erfindung ist daher eine Stellvorrichtung der eingangs erwähnten Art zur Verfügung zu stellen, die eine möglichst kompakte Baugrösse aufweist, aber dennoch ein zuverlässiges Funktionieren ermöglicht.

Eine erfindungsgemässe Stellvorrichtung, welche diese Aufgabe löst, ist im Anspruch 1 angegeben. Die weiteren Ansprüche geben bevorzugte Ausführungen an.

Die erfindungsgemässe Stellvorrichtung hat den Vorteil, dass sie eine kompakte Baugrösse aufweist und eine Platzeinsparung ermöglicht. Weitere Vorteile gegenüber bekannten Stellvorrichtungen sind eine Vereinfachung der elektrischen Verkabelung, eine Erhöhung der Zuverlässigkeit, mit welcher die Stellvorrichtung arbeitet, eine Vereinfachung der Montage und eine Kostenreduktion für die Herstellung.

Die Erfindung wird im Folgenden anhand von Ausführungsbeispielen unter Bezugnahme auf Figuren erläutert.
Fig. 1 zeigt schematisch ein Ausführungsbeispiel der erfindungsgemässen Stellvorrichtung, bei welcher der Scheinwerfer um zwei Achsen schwenkbar ist,
Fig. 2 zeigt schematisch ein weiteres Ausführungsbeispiel der erfindungsgemässen Stellvorrichtung, bei welcher der Scheinwerfer um eine Achse kippbar und um eine zweite Achse drehbar ist,
Fig. 3 zeigt eine Detail-Ansicht der erfindungsgemässen Stellvorrichtung gemäss Fig. 2 von vorne,
Fig. 4 zeigt eine Detail-Ansicht der erfindungsgemässen Stellvorrichtung gemäss Fig. 2 von der Seite, und
Fig. 5 zeigt schematisch ein weiteres Ausführungsbeispiel der erfindungsgemässen Stellvorrichtung, bei welcher der Scheinwerfer um zwei Achsen schwenkbar ist.

### 1. Ausführungsbeispiel

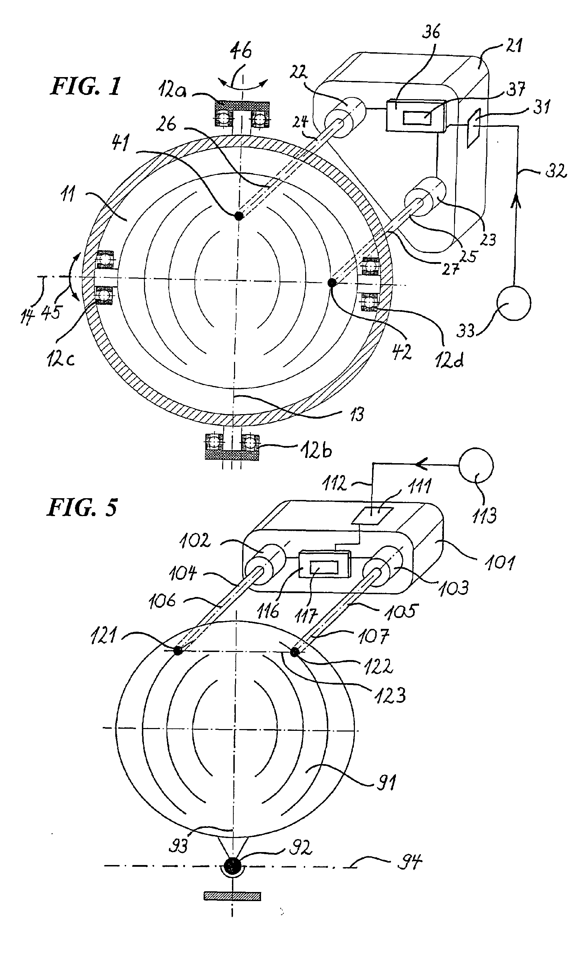

Fig. 1 zeigt ein erstes Ausführungsbeispiel der erfindungsgemässen Stellvorrichtung zur gesteuerten Einstellung der Richtung eines Lichtbündels, welches von einem Scheinwerfer eines Fahrzeuges ausgesendet wird.

Ein Reflektor 11 des Scheinwerfers ist an vier Halterungen 12a, 12b, 12c, 12d, die fest im Einbaubereich des Scheinwerfers montiert sind, drehbar um zwei Schwenkachsen 13 und 14 gelagert. Die vier Halterungen 12a, 12b, 12c, 12d sind dabei so angeordnet, dass zwei Halterungen 12a, 12b auf der einen Schwenkachse 13 und zwei Halterungen 12c, 12d auf der anderen Schwenkachse 14 liegen. Die Halterungen 12a, 12b, 12c, 12d enthalten z. B. je ein Gelenk und ein Kugellager und ermöglichen so eine Schwenkung des Reflektors um die beiden Schwenkachsen 13 und 14.

Vorzugsweise stehen die beiden Schwenkachsen 13 und 14 senkrecht aufeinander, wobei die eine Schwenkachse 13 entlang der Vertikalen verläuft.

Zur Schwenkung des Reflektors um die beiden Schwenkachsen 13 und 14 ist die Erfindung nicht an die Verwendung von vier Halterungen gebunden. Anstelle von diesen kann ein Kugelgelenk verwendet werden, das an der Position von einem der vier Halterungen 12a, 12b, 12c, 12d angebracht ist.

Wie Fig. 1 zeigt, umfasst die Stellvorrichtung ein Gehäuse 21, in welchem zwei Stellelemente 22 und 23 enthalten sind. Jedes der beiden Stellelemente 22 und 23 ist mit einem Schaft 24, 25 mechanisch verbunden, wobei die beiden Schäfte 23 und 25 je eine mechanische Achse bilden, die auf der einen Seite des Gehäuses 21 hervorragen.

Die beiden Stellelemente 22 und 23 sind je mit einem Linearantrieb versehen, der es ermöglicht jeweils einen Schaft 24, 25 entlang seiner Achse 26, 27 mit einem bestimmten Hub zu verschieben. Sie sind im Gehäuse 21 möglichst nahe zueinander, bevorzugterweise benachbart angeordnet, um eine kompakte Einheit zu bilden. In einer bevorzugten Ausbildung der Erfindung ist der Abstand zwischen den beiden Schäften 24 und 25 kleiner als der halbe Durchmesser des Reflektors 11.

Am Gehäuseäusseren sind Kabelanschlüsse 31 z. B. in Form einer Steckverbindung vorgesehen, an welche mittels elektrischer Verbindungsleitungen 32 elektronische Elemente 33 angeschlossen werden können, die ausserhalb des Gehäuses 21 am Fahrzeug angebracht sind. Diese elektronischen Elemente 33 können z. B. Sensoren oder eine Spannungsquelle sein.

Analog der obigen Beschreibung kann anstelle des Gehäuses 21 auch ein Träger z. B. eine Trägerplatte benutzt werden, um die beiden Stellelemente 22 und 23 darauf nahe zueinander, bevorzugterweise benachbart zusammen mit den Kabelanschlüssen 31 anzuordnen.

In einer bevorzugten Ausbildung der Erfindung ist innerhalb des Gehäuses 21 oder auf dem Träger eine Steuerschaltung 36 zur Ansteuerung der beiden Linearantriebe angeordnet. Dies hat den Vorteil, dass Anzahl und Länge der Verbindungsleitungen sowie die Anzahl benötigter elektronischer Bauteile reduziert werden kann. Im Weiteren bietet das Gehäuse 21 Schutz vor äusseren Einflüssen, so dass die Zuverlässigkeit, mit welcher die Stellvorrichtung arbeitet, erhöht wird.

In einer weiteren Ausführung ist ein Teil oder die ganze Steuerschaltung 36 ausserhalb des Gehäuses 21 oder des Trägers angeordnet und ist mit den Kabelanschlüssen 31 elektrisch verbunden. Dadurch ist eine besonders kompakte Bauweise des Gehäuses mit zwei Stellelementen möglich.

Mit der Steuerschaltung 36 sind Steuersignale zur Ansteuerung der beiden Linearantriebe erzeugbar. Dazu enthält die Steuerschaltung 36 elektronische Bauteile 37, z.B. einen Mikroprozessor, als Mittel, um Signale aufzunehmen und zu verarbeiten, welche Informationen über den Zustand des Fahrzeuges enthalten. In einer bevorzugten Ausführungsform werden die Signale von einem oder mehreren Sensoren 33 geliefert, die z. B. an der Fahrzeugachse oder an der Lenkvorrichtung des Fahrzeuges angebracht sind. Die Signale enthalten Informationen über die Lage, Neigung, geographische Position, Fahrrichtung und/oder Lenkrichtung des Fahrzeuges. Entsprechend dieser Signale sind die beiden Stellelemente 22 und 23 ansteuerbar, um eine Bewegung der beiden Schäfte 24 und 25 zu bewirken.

In einer weiteren Ausführung sind mit der Steuerschaltung 36 weitere Steuersignale erzeugbar sind, mit welcher weitere Stellelemente ansteuerbar sind. Mittels diesen kann z. B. die Blende oder eine Blendenwalze bewegt werden, um die Lichtverteilung entsprechend zu verändern.

Jede der beiden Schäfte 24 und 25 ist an einem seiner Ende mit einer Verbindungsstelle 41, 42 des Reflektors 11 mechanisch verbindbar. Die beiden Verbindungsstellen 41 und 42 können z. B. je ein Kugelgelenk enthalten, wobei das Ende eines Schaftes jeweils in Form eines Kugelkopfes ausgebildet ist.

Die erste Verbindungsstelle 41 und die vertikale Schwenkachse 13 definieren eine erste Ebene. Die zweite Verbindungsstelle 42 und die horizontale Schwenkachse 14 definieren eine zweite Ebene. In einer bevorzugten Ausführung sind diese beiden Ebenen im Wesentlichen senkrecht zueinander. Die genaue Anordnung der Verbindungsstellen 41 und 42 lässt sich jedoch entsprechend den Platzverhältnissen und Geometrien des Scheinwerfer-Einbaureichs anpassen.

Aus der obigen Beschreibung ergibt sich folgende Funktionsweise der Stellvorrichtung: Signale über den Zustand des Fahrzeuges, die z. B. Sensoren 33 liefern, werden von der Steuerschaltung 36 empfangen und verarbeitet. Diese gibt entsprechende Steuersignale an die Stellelemente 22 und 23 weiter.

Für eine Schwenkung des Reflektors 11 z. B. um die horizontale Schwenkachse 14, wird der Schaft 24 entlang seiner Achse 26 mittels des Linearantriebes verschoben. Dadurch resultiert eine Auf-Ab-Bewegung 45 des Lichtbündels und somit ein Einstellen der Leuchtweite. Andererseits sind durch die Auf-Ab-Bewegung 45 Nickbewegungen des Fahrzeuges so ausgleichbar, dass die Leuchtweite im Wesentlichen konstant bleibt, wodurch die Gefahr, dass entgegenkommende Fahrer geblendet werden, reduziert werden kann.

Für eine Schwenkung des Reflektors 11 um die vertikale Schwenkachse 13 wird der Schaft 25 entlang seiner Achse 27 mittels des Linearantriebes verschoben, wodurch eine Links-Rechts-Bewegung 46 des Lichtbündels erfolgt. Somit kann beim Fahren einer Kurve mit dem Fahrzeug das Lichtbündel entsprechend in Richtung der Kurve geschwenkt und die Fahrstrasse besser ausgeleuchtet werden.

### 2. Ausführungsbeispiel

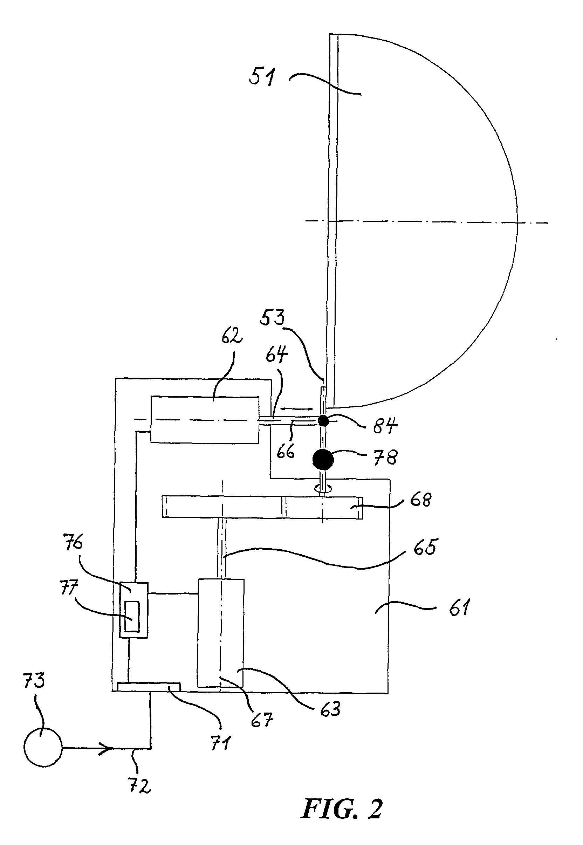

Fig. 2 zeigt schematisch ein zweites Ausführungsbeispiel der erfindungsgemässen Stellvorrichtung zum Kippen und Drehen eines Reflektors 51.

Die Stellvorrichtung umfasst ein Gehäuse 61, in welchem zwei Stellelemente 62 und 63 enthalten sind. Das erste Stellelement 62 ist mit einem Schaft 64 mechanisch verbunden, der eine mechanische Achse bildet und aus dem Gehäuse 61 hervorragt, und ist mittels einer Verbindungsstelle 84 mit dem Reflektor 51 mechanisch verbindbar. Das erste Stellelement 62 enthält einen Linearantrieb, der eine Verschiebung des Schaftes 64 entlang seiner Achse 66 ermöglicht.

Das zweite Stellelement 63 enthält einen Schaft 65 und einen Drehantrieb, mittels welchem der Schaft 65 um seine Achse 67 rotierbar ist. Gemäss Fig. 2 ist diese Achse 67 gegenüber dem Reflektor 51 versetzt angeordnet. Wie unten beschrieben, dient eine Getriebe 68 dazu, die Kräfte des zweiten Stellelementes 63 auf den Reflektor 51 zu übertragen. Dadurch können die beiden Stellelemente 62 und 63 nahe beieinander, bevorzugterweise benachbart positioniert werden, wodurch eine kompakte Bauweise ermöglicht wird.

Die Verwendung der zwei Stellelemente 62 und 63, die mit einem Linearantrieb bzw. einem Drehantrieb versehen sind, ermöglicht sowohl ein Kippen des Reflektors um die horizontale Schwenkachse 54 als auch ein Drehen des Reflektors um die vertikale Schwenkachse 53.

Am Gehäuseäusseren sind Kabelanschlüsse 71 z. B. in Form einer Steckverbindung vorgesehen, an welche elektronische Elemente 73, die ausserhalb des Gehäuses 61 am Fahrzeug angebracht sind, mittels elektrischer Verbindungsleitungen 72 angeschlossen werden können.

Analog der obigen Beschreibung kann anstelle des Gehäuses 61 auch ein Träger z. B. eine Trägerplatte benutzt werden, um die beiden Stellelemente 62 und 63 darauf nahe zueinander, bevorzugterweise benachbart zusammen mit den Kabelanschlüssen 71 anzuordnen.

In einer bevorzugten Ausbildung der Erfindung ist innerhalb des Gehäuses 61 eine Steuerschaltung 76 angeordnet, mittels welcher Steuersignale zur Ansteuerung des Linearantriebes und des Drehantriebs erzeugbar sind.

In einer weiteren Ausführung ist ein Teil oder die ganze Steuerschaltung 76 ausserhalb des Gehäuses 61 oder des Trägers angeordnet und ist mit den Kabelanschlüssen 71 elektrisch verbunden.

Die Steuerschaltung 76 ist analog aufgebaut wie im ersten Ausführungsbeispiels beschrieben. Insbesondere enthält sie elektronische Bauteile 77 um Signale aufzunehmen und zu verarbeiten. In einer weiteren Ausführung sind mit der Steuerschaltung 76 weitere Steuersignale erzeugbar sind, mit welcher weitere Stellelemente ansteuerbar sind.

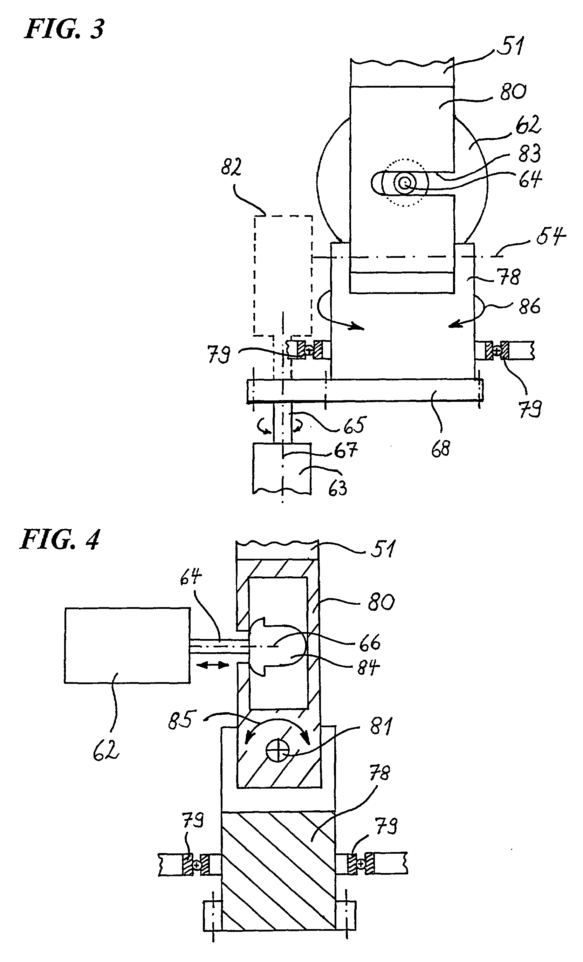

Wie in Fig. 3 gezeigt, ist der um seine Achse 67 rotierbare Schaft 65 mit einem Getriebe 68 verbunden, welches z. B. als Zahnrad- oder Schneckengetriebe ausgebildet ist. Dieses ist mit dem unteren Teil eines Rotationselementes 78 verbunden, welches mittels eines Kugellagers 79 um die vertikale Schwenkachse 53 rotierbar gelagert ist und so eine mechanische Drehachse bildet, die um ihre Achse rotierbar ist.

Der obere Teil des Rotationselementes 78 weist eine z. B. rechteckige Ausnehmung auf, in welche der untere Teil eines Verbindungselementes 80 eingelassen ist. Das Rotationselement 78 und das Verbindungselement 80 sind durch eine mechanische Achse in Form eines Drehgelenkes 81 verbunden. Der obere Teil des Verbindungselementes 80 ist fest mit dem Reflektor 51 mechanisch verbindbar.

In einer weiteren Ausführung ist das Stellelement 63 mit dem Drehantrieb auf derselben Seite des Getriebes 68 wie das Stellelement 62 mit dem Linearantrieb angeordnet, wie dies durch die gestrichelten Linien 82 in Fig. 3 dargestellt ist. Dadurch ist eine besonders kompakte Bauweise möglich.

Oberhalb des Drehgelenkes 81 ist das Verbindungselement 80 mit einem Schlitz 83 versehen. Wie in der Seitenansicht gemäss Fig. 4 gezeigt, ist der mit dem Linearantrieb verbundenen Schaft 64 durch diesen Schlitz 83 hindurch mit einem kugelförmigen Teil eines Kugelgelenkes 84 verbunden, das in einer Ausnehmung des Verbindungselementes 80 angebracht ist. Anstelle des Schlitzes 83 kann das Verbindungselement 80 auch mit einem genügend grossen Langloch versehen sein. Durch diese Lagerung wird bei einer Drehung des Rotationselementes 78 um die vertikale Schwenkachse 53 ein Ausgleichen der Bewegung ermöglicht, so dass auf den Schaft 64 keine oder nur geringe Querkräfte wirken.

Aus der obigen Beschreibung ergibt sich folgende Funktionsweise der Stellvorrichtung: Für ein Kippen 85 des Reflektors 51 um die Schwenkachse 54, wird der Schaft 64 entlang seiner Achse 66 mittels des Linearantriebes verschoben und der Reflektor 51 wird gekippt. Für eine Drehung 86 des Reflektors 51 um die Schwenkachse 53, wird der Schaft 65 um seine Achse 67 mittels des Drehantriebes rotiert und der Reflektor 51 wird entsprechend gedreht.

### 3. Ausführungsbeispiel

Fig. 5 zeigt ein drittes Ausführungsbeispiel der erfindungsgemässen Stellvorrichtung.

Ein Reflektor 91 eines Scheinwerfers ist an einer Halterung in Form eines Kugelgelenkes 92 drehbar um mindestens zwei Schwenkachsen 93 und 94 gelagert. In einer anderen Ausführungen kann auch eine Lagerung des Reflektors 91 verwendet werden, wie sie im ersten Ausführungsbeispiel beschrieben ist.

Vorzugsweise stehen die beiden Schwenkachsen 93 und 94 senkrecht aufeinander, wobei die eine Schwenkachse 93 entlang der Vertikalen verläuft.

Wie Fig. 5 zeigt, umfasst die Stellvorrichtung ein Gehäuse 101, in welchem zwei Stellelemente 102 und 103 enthalten sind. Jedes der beiden Stellelemente 102, 103 ist mit einem Schaft 104, 105 mechanisch verbunden, wobei die beiden Schäfte 104 und 105 je eine mechanische Achse bilden und auf der einen Seite des Gehäuses 101 hervorragen.

Die beiden Stellelemente 102 und 103 sind je mit einem Linearantrieb versehen, der es ermöglicht jeweils einen Schaft 104, 105 entlang seiner Achse 106, 107 mit einem bestimmten Hub zu verschieben. Sie sind im Gehäuse 101 möglichst nahe zueinander, bevorzugterweise benachbart angeordnet, um eine kompakte Einheit zu bilden. In einer bevorzugten Ausbildung der Erfindung ist der Abstand zwischen den beiden Schäften 104 und 105 kleiner als der halbe Durchmesser des Reflektors 91.

Am Gehäuseäusseren sind Kabelanschlüsse 111 z. B. in Form einer Steckverbindung vorgesehen, an welche elektronische Elemente 113, die ausserhalb des Gehäuses 101 am Fahrzeug angebracht sind, mittels elektrischer Verbindungsleitungen 112 angeschlossen werden können.

Analog der obigen Beschreibung kann anstelle des Gehäuses 101 auch ein Träger z. B. eine Trägerplatte benutzt werden, um die beiden Stellelemente 102 und 103 darauf nahe zueinander, bevorzugterweise benachbart zusammen mit den Kabelanschlüssen 111 anzuordnen.

In einer bevorzugten Ausbildung der Erfindung ist innerhalb des Gehäuses 101 oder auf dem Träger eine Steuerschaltung 116 zur Ansteuerung der beiden Linearantriebe angeordnet.

In einer weiteren Ausführung ist ein Teil oder die ganze Steuerschaltung 116 ausserhalb des Gehäuses 101 oder des Trägers angeordnet und ist mit den Kabelanschlüssen 111 elektrisch verbunden.

Jeder der beiden Schäfte 104, 105 ist an einem seiner Ende je mit einer Verbindungsstelle 121, 122 des Reflektors mechanisch verbindbar. Die beiden Verbindungsstellen 121 und 122 können z. B. je ein Kugelgelenk enthalten, wobei das Ende eines Schaftes 104, 105 jeweils in Form eines Kugelkopfes ausgebildet ist.

In einer bevorzugten Ausführung ist die Gerade 123, welche durch die beiden Verbindungsstellen 121 und 122 definiert ist, im Wesentlichen parallel zur horizontalen Schwenkachse 94. In einer weiteren Ausführung ist das Gehäuse 101 seitlich vom Reflektor 91 angeordnet und die Gerade 123, welche durch die beiden Verbindungsstellen 121 und 122 definiert ist, im Wesentlichen parallel zur vertikalen Schwenkachse 93.

Vorzugsweise etwa mittig zwischen den beiden Schäften 104 und 105 ist die Halterung 92 angeordnet, so dass diese und die beiden Verbindungsstellen 121 und 122 in den Eckpunkten eines im Wesentlichen gleichschenkligen Dreiecks angeordnet sind, wobei ihre Grundlinie entlang der Geraden 123 verläuft, welche durch die beiden Verbindungsstellen 121 und 122 definiert ist.

Die Steuerschaltung 116 enthält elektronische Bauteile 117, z.B. einen Mikroprozessor, um Signale aufzunehmen und zu verarbeiten, welche Informationen über den Zustand des Fahrzeuges enthalten. Wie im ersten Ausführungsbeispiel beschrieben, werden die Signale vorzugsweise von Sensoren 113 geliefert. Entsprechend dieser Signale sind die beiden Stellelemente 102 und 103 ansteuerbar, um eine gleichzeitige Bewegung der beiden Schäfte 104 und 105 zu bewirken. In einer weiteren Ausführung sind mit der Steuerschaltung 116 weitere Steuersignale erzeugbar sind, mit welcher weitere Stellelemente ansteuerbar sind.

Gemäss Fig. 5 werden die beiden Schäfte 104 und 105 für eine Auf-Ab-Bewegung des Lichtbündels gleichzeitig mit im Wesentlichen gleichem Hub in die gleiche Richtung bewegt. Für die Links-Rechts-Bewegung des Lichtbündels werden die Schäfte 104 und 105 gleichzeitig mit im Wesentlichen gleichem Hub in entgegengesetzten Richtungen bewegt. Eine entsprechende Funktionsweise der Stellvorrichtung ergibt sich je nach Anordnung der Halterung 92 und der beiden Verbindungsstellen 121 und 122 im Einbaubereich des Scheinwerfers.

Die Stellvorrichtung hat besonders den Vorteil, dass beide Stellelemente 102 und 103 bei einer Schwenkung des Reflektors 91 um eine der beiden Schwenkachse 93, 94 aktiv arbeiten und somit die Verstellkraft doppelt so gross ist. Um eine Schwenkung zu erzeugen, reichen also weniger kräftige Stellelemente aus, was eine besonders kompakte Bauweise ermöglicht.

Aus der vorangehenden Beschreibungen sind dem Fachmann zahlreiche Abwandlungen zugänglich, ohne den Schutzbereich der Erfindung zu verlassen, der durch die Ansprüche definiert ist.

Analog wie oben beschrieben kann anstelle des Reflektors ein ganzer Scheinwerfer oder eine strahlenbeeinflussende Scheinwerferkomponente, welche im Scheinwerfer enthalten ist und welche die Richtung des Lichtbündels beeinflusst, wie z. B. eine Blende, ein Linsensystem oder Prismen, mittels Halterungen oder Gelenken drehbar um mindestens zwei Schwenkachsen gelagert sein. Entsprechend sind zur Schwenkung mittels der Stellvorrichtung die beiden mechanischen Achsen mit je einer Verbindungsstelle des Scheinwerfers oder der strahlenbeeinflussenden Scheinwerferkomponente mechanisch verbindbar.

In einer weiteren Ausführungsform wird die Steuerschaltung dazu verwendet, gleichzeitig mehr als einen Scheinwerfer oder eine Scheinwerferkomponente anzusteuern. So werden im Frontbereich von Fahrzeugen, insbesondere Kraftfahrzeugen, üblicherweise mindestens zwei Scheinwerfer zur Beleuchtung verwendet.

In einer weiteren Ausführungsform wird das sogenannte "Global Positioning System" dazu verwendet, Informationen über die Lage und geographische Position des Fahrzeuges zu erhalten, und daraus mittels der Steuerschaltung Steuersignale zur entsprechenden Einstellung des Lichtbündels zu erzeugen. Es ist auch möglich, durch Einbezugnahme von Daten über die Geometrie der Fahrstrasse und die Fahrgeschwindigkeit des Fahrzeuges nebst seiner momentanen auch seine zukünftige Lage und geographische Position zu berechnen, und das Lichtbündel entsprechend vorausschauend zu ändern.

### Bezugszeichenliste

- 11: Reflektor
- 12a: 1. Halterung
- 12b: 2. Halterung
- 12c: 3. Halterung
- 12d: 4. Halterung
- 13: Vertikale Schwenkachse
- 14: Horizontale Schwenkachse
- 21: Gehäuse
- 22: 1. Stellelement
- 23: 2. Stellelement
- 24: 1. Schaft
- 25: 2. Schaft
- 26: Achse des 1. Schaftes
- 27: Achse des 2. Schaftes
- 31: Kabelanschlüsse
- 32: Elektrische Verbindungsleitung
- 33: Elektronische Bauelemente
- 36: Steuerschaltung
- 37: Elektronisches Bauteil
- 41: 1. Verbindungsstelle
- 42: 2. Verbindungsstelle
- 45: Schwenkungsrichtung bei Auf-Ab-Schwenkung
- 46: Schwenkungsrichtung bei Links-Rechts-Schwenkung
- 51: Reflektor
- 53: Vertikale Schwenkachse
- 54: Horizontale Schwenkachse
- 61: Gehäuse
- 62: 1. Stellelement
- 63: 2. Stellelement
- 64: 1. Schaft
- 65: 2. Schaft
- 66: Achse des 1. Schaftes
- 67: Achse des 2. Schaftes
- 68: Getriebe
- 71: Kabelanschlüsse
- 72: Elektrische Verbindungsleitung
- 73: Elektronische Bauelemente
- 76: Steuerschaltung
- 77: Elektronisches Bauteil
- 78: Rotationselement
- 79: Kugellager
- 80: Verbindungselement
- 81: Drehgelenk
- 82: Alternative Anordnung des 2. Stellelementes 63
- 83: Schlitz
- 84: Kugelgelenk
- 85: Schwenkungsrichtung beim Kippen des Reflektors 51
- 86: Schwenkungsrichtung beim Drehen des Reflektors 51
- 91: Reflektor
- 92: Kugelgelenk
- 93: Vertikale Schwenkachse
- 94: Horizontale Schwenkachse
- 101: Gehäuse
- 102: 1. Stellelement
- 103: 2. Stellelement
- 104: 1. Schaft
- 105: 2. Schaft
- 106: Achse des 1. Schaftes
- 107: Achse des 2. Schaftes
- 111: Kabelanschlüsse
- 112: Elektrische Verbindungsleitung
- 113: Elektronische Bauelemente
- 116: Steuerschaltung
- 117: Elektronisches Bauteil
- 121: 1. Verbindungsstelle
- 122: 2. Verbindungsstelle
- 123: Gerade, welche durch die Verbindungsstellen 121 und 122 verläuft

## Patentansprüche

1. Stellvorrichtung zur gesteuerten Einstellung der Richtung eines Lichtbündels, welches von einem Scheinwerfer eines Fahrzeuges ausgesendet wird, wobei der Scheinwerfer oder eine strahlenbeeinflussende Scheinwerferkomponente (11, 51, 91), welche die Richtung des Lichtbündels beeinflusst, um mindestens zwei Schwenkachsen (13, 14, 53, 54, 93, 94) schwenkbar ist, **dadurch gekennzeichnet, dass** die Stellvorrichtung folgende Komponenten umfasst:
(a) ein erstes Stellelement (22, 62, 102),
(b) ein zweites Stellelement (23, 63, 103), das benachbart zum ersten Stellelement (22, 62, 102) angeordnet ist,
(c) eine erste mechanische Achse (24, 64, 104), welche mittels des ersten Stellelementes (22, 62, 102) bewegbar ist und welche an einem ihrer Enden mit einer ersten Verbindungsstelle (41, 84, 121) des Scheinwerfers oder der Scheinwerferkomponente (11, 51, 91) mechanisch verbindbar ist,
(d) eine zweite mechanische Achse (25, 78, 105), welche mittels des zweiten Stellelementes (23, 63, 103) bewegbar ist und welche an einem ihrer Enden mit einer zweiten Verbindungsstelle (42, 80, 122) des Scheinwerfers oder der Scheinwerferkomponente (11, 51, 91) mechanisch verbindbar ist, und
(e) eine Steuerschaltung (36, 76, 116) mit welcher Steuersignale erzeugbar sind, die eine Bewegung der ersten (24, 64, 104) und zweiten mechanischen Achse (25, 78, 105) bewirken.

2. Stellvorrichtung gemäss Anspruch 1, **dadurch gekennzeichnet, dass** das erste Stellelement (22, 62, 102) und das zweite Stellelement (23, 63, 103) auf einem Träger angeordnet sind oder in einem Gehäuse (21, 61, 101) enthalten sind, um eine kompakte Einheit zu bilden.

3. Stellvorrichtung gemäss Anspruch 1 oder 2, **dadurch gekennzeichnet, dass** die Steuerschaltung (36, 76, 116) auf dem Träger angeordnet ist oder in dem Gehäuse (21, 61, 101) enthalten ist.

4. Stellvorrichtung nach einem der Ansprüche 1 bis 3, **dadurch gekennzeichnet, dass** mit der Steuerschaltung (36, 76, 116) weitere Steuersignale erzeugbar sind, mit welcher mindestens ein drittes Stellelement ansteuerbar ist.

5. Stellvorrichtung nach einem der Ansprüche 1 bis 4, **dadurch gekennzeichnet, dass** die beiden Schwenkachsen (13, 14, 53, 54, 93, 94) im Wesentlichen senkrecht aufeinander stehen und eine der beiden Schwenkachsen (13, 53, 93) im Wesentlichen entlang der Vertikalen verläuft.

6. Stellvorrichtung nach einem der Ansprüche 1 bis 5, **dadurch gekennzeichnet, dass** die erste mechanische Achse (24, 104) ein erster Schaft (24, 104) ist, der entlang seiner Achse (26, 106) verschiebar ist, und dass die zweite mechanische Achse (25, 105) ein zweiter Schaft (25, 105) ist, der entlang seiner Achse (27, 107) verschiebar ist.

7. Stellvorrichtung nach einem der Ansprüche 1 bis 5, **dadurch gekennzeichnet, dass** die erste mechanische Achse (64) ein erster Schaft (64) ist, der entlang seiner Achse (66) verschiebar ist, und dass die zweite mechanische Achse (78) eine mechanische Drehachse (78) ist, die um ihre Achse rotierbar (86) ist.

8. Stellvorrichtung nach Anspruch 6, **dadurch gekennzeichnet, dass** zur Schwenkung des Lichtbündels um eine der beiden Schwenkachsen (93, 94) die beiden Schäfte (104, 105) gleichzeitig entweder in die gleiche Richtung oder in entgegengesetzten Richtungen verschiebar sind.

9. Stellvorrichtung nach Anspruch 8, **dadurch gekennzeichnet, dass** die Gerade (123), welche durch die beiden Verbindungsstellen (121, 122) geht, im Wesentlichen entlang der Vertikalen oder entlang einer Horizontalen verläuft.

10. Stellvorrichtung nach einem der Ansprüche 1 bis 9, **dadurch gekennzeichnet, dass** die Steuerschaltung (36, 76, 116) Mittel (37, 77, 117) enthält, um wenigstens ein Signal aufzunehmen und zu verarbeiten, welches Informationen über den Zustand des Fahrzeuges enthält, insbesondere die Lage, Neigung, geographische Position, Fahrrichtung und/oder Lenkrichtung des Fahrzeuges, um die Orientierung des Lichtbündels bei Zustandsänderungen des Fahrzeuges verändern zu können.

11. Fahrzeugscheinwerfer mit einer Stellvorrichtung nach einem der Ansprüche 1 bis 10.
